(19) Europäisches Patentamt / European Patent Office / Office européen des brevets

(11) **EP 3 865 304 B1**

(12) **EUROPÄISCHE PATENTSCHRIFT**

(45) Veröffentlichungstag und Bekanntmachung des Hinweises auf die Patenterteilung:
**05.01.2022 Patentblatt 2022/01**

(51) Int Cl.:
***B41F 33/00*** *(2006.01)*        ***G06K 9/03*** *(2006.01)*
***G06T 7/00*** *(2017.01)*

(21) Anmeldenummer: **20157140.3**

(22) Anmeldetag: **13.02.2020**

(54) **DETERMINISTISCHE BILDINSPEKTION**

DETERMINISTIC IMAGE INSPECTION

VÉRIFICATION D'IMAGE DÉTERMINISTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.08.2021 Patentblatt 2021/33**

(73) Patentinhaber: **Heidelberger Druckmaschinen AG 69115 Heidelberg (DE)**

(72) Erfinder:
• **Schumann, Frank**
  **69118 Heidelberg (DE)**

• **Krieger, Jan**
  **69124 Heidelberg (DE)**
• **Carstensen, Bennet**
  **69207 Sandhausen (DE)**
• **Eisele, Peter**
  **76684 Östringen (DE)**

(56) Entgegenhaltungen:
**EP-A1- 3 456 535**      **DE-B3-102016 203 392**
**JP-A- 2010 249 565**

## Beschreibung

Die Erfindung beschäftigt sich mit einem Verfahren zur Inspektion von Druckerzeugnissen, wobei die Inspektion abhängig vom abgeschätzten Bewertungsaufwand gefundener potentieller Bildfehler durchgeführt wird.

Die Erfindung liegt im technischen Gebiet der digitalen Qualitätskontrolle.

Bei der Herstellung von Druckerzeugnissen in Druckmaschinen entsprechender Größe wird die Qualitätskontrolle oft mittels Bildinspektionsverfahren durchgeführt. Diese Verfahren bedienen sich dabei meist Bilderfassungssystemen deren Bildsensoren, meist Kameras, innerhalb der Druckmaschine nach dem letzten Druckwerk angebracht sind. Die Inspektion muss dabei jeweils schnell genug erfolgen, um mit der Druckgeschwindigkeit Schritt zu halten. Daher steht nur ein fest definiertes Zeitfenster für die Inspektion eines Druckerzeugnisses, wie einem bedruckten Druckbogen, zur Verfügung. Wenn sich nun auf einem Druckbogen sehr viele oder sehr große Druckfehler befinden, wird die vorgegebene Zeitdauer, welche zur Analyse und Bewertung gefundener Druckfehler zur Verfügung steht, überschritten. Denn zur Bildinspektion gehört in den meisten Fällen nicht nur das Finden von Abweichungen zu einem sogenannten Gut- oder Referenzbild, sondern auch die Analyse der gefundenen Fehler um sicherzustellen, dass es sich bei gefunden Abweichungen auch wirklich um Druckfehler handelt und nicht z.B. um Fehler im Bilderfassungssystem. In diesem Fall wird dann entweder die Untersuchung der gefundenen, aber noch nicht analysierten Druckfehler trotzdem durchgeführt, wodurch es zu einem unkontrollierten Zeitversatz bei der Bildinspektion kommt, da die Inspektion noch bereits gedruckte Druckbögen abarbeitet, während die Druckmaschine schon längst die nächsten Druckerzeugnisse produziert. Alternativ wird die Bildinspektion bei Ablauf der Zeit pro Druckbogen einfach abgebrochen, wodurch nicht analysierte Druckfehler nicht gefunden werden. Da beide Vorgehensweisen die Qualität des Bildinspektionsverfahren herabsetzen, wird nach einer Möglichkeit gesucht dies zu verhindern. Somit muss eine Lösung gefunden werden, damit die Bildinspektion innerhalb der vorgegebenen Zeit pro Druckbogen nicht überschritten wird und trotzdem sämtliche auftretenden Druckfehler auch als solche erkannt werden.

Die europäische Patentanmeldung EP 3 456 535 A1 offenbart ein Verfahren zum Makulaturmanagement in einer Bedruckstoffe verarbeitenden Maschine mittels eines Rechners, wobei im Rahmen des Makulaturmanagements Sensoren, insbesondere in Form eines Bilderfassungssystems mit mindestens einem Bildsensor, von den gedruckten Druckerzeugnissen Druckbilder erfassen und mit einer digitalen Referenz abgleichen und im Falle von Abweichungen der erfassten Druckbilder von der digitalen Referenz die fehlerhaft erkannten Druckerzeugnisse ausgeschleust werden, und welches dadurch gekennzeichnet ist, dass Makulaturprofile erstellt werden, welche Parameter enthalten denen jeweils bestimmte Aktionen zugeordnet werden und für von der digitalen Referenz abweichende im Rahmen der Bildinspektion erfasste Druckbilder in Abhängigkeit der Parameter die bestimmten Aktionen durchgeführt werden, wobei unterschiedliche Endgeräte jeweils abhängig von den bestimmten Aktionen angesteuert werden.

Die Aufgabe der vorliegenden Erfindung besteht somit darin, ein Verfahren zur Bildinspektion von Druckerzeugnissen zu finden, welches die aus dem Stand der Technik bekannten Nachteile überwindet und eine zuverlässige Bildinspektion ermöglicht.

Die Aufgabe wird erfindungsgemäß durch die Merkmale des Anspruchs 1 gelöst, nämlich durch ein Verfahren zur Inspektion von Druckerzeugnissen einer Bedruckstoffe verarbeitenden Maschine mittels eines Rechners, wobei produzierte Druckerzeugnisse mittels mindestens eines Bildsensors erfasst, digitalisiert und vom Rechner hinsichtlich möglicher Fehler untersucht werden, wobei Fehler in den Druckerzeugnissen vom Rechner durch Abgleich des erfassten, digitalisierten Druckbildes mit einem digitalen Referenzbild und Auswertung auftretender Abweichungen ermittelt werden und fehlerhafte Druckerzeugnisse entsprechend markiert und ausgeschleust werden welches dadurch gekennzeichnet ist, dass der Rechner eine räumliche Aufteilung jedes digitalisierten Druckerzeugnisses in Bereiche mit Abweichungen vornimmt, den Zeitaufwand der Untersuchung jedes dieser Bereiche berechnet und die Untersuchung eines digitalisierten Druckerzeugnisses abbricht, wenn der Zeitaufwand zur Untersuchung der Bereiche einen vorgegebenen Zeitwert pro digitalisiertem Druckerzeugnis überschreitet. Mit dieser dynamischen Anpassung des Inspektionsverfahrens an den Zeitaufwand für jedes zu inspizierende Druckbild wird sichergestellt, dass der zur Verfügung stehende Zeitrahmen für die Bewertung jedes Druckbildes nicht mehr überschritten wird. Zwar ist es auch im vorliegenden erfindungsgemäßen Verfahren noch möglich, dass bei Auftreten sehr vieler kleinerer Abweichungen, welche entsprechende Bildfehler darstellen könnten, nicht alle dieser Abweichungen entsprechend untersucht werden können, um zu bewerten, ob es sich hier wirklich um echte Druckfehler handelt oder um Abweichungen, die keine Druckfehler darstellen. Dies ist jedoch einem unkontrollierten Timeout auf jeden Fall vorzuziehen. Zudem wird bei dem erfindungsgemäßen Vorgehen in der Praxis dann ohnehin nur ein kleiner Teil der noch zu bearbeitenden Abweichungen nicht näher untersucht und automatisiert als Bildfehler markiert. Zudem kann davon ausgegangen werden, dass bei Auftreten so massiv vieler Abweichungen, die hinsichtlich des Vorliegens eines Druckfehlers untersucht werden müssen, das entsprechende Druckbild sowieso in den meisten Fällen Ausschuss bzw. Makulatur darstellt bzw. ein sonstiger massiver Fehler im Bildinspektionssystem selbst vorliegt.

Vorteilhafte und daher bevorzugte Weiterbildungen des erfindungsgemäßen Verfahrens ergeben sich aus den zugehörigen Unteransprüchen sowie aus der Beschreibung mit den zugehörigen Zeichnungen.

Eine bevorzugte Weiterbildung des erfindungsgemäßen Verfahrens ist dabei, dass der Rechner den Zeitaufwand der Untersuchung jedes der Bereiche jeweils für jeden Bereich direkt vor der Untersuchung dieses Bereichs berechnet und die Untersuchung des aktuellen, digitalisierten Druckerzeugnisses abbricht, wenn der vorgegebene Zeitwert überschritten wird, wobei die Abweichungen noch nicht untersuchter Bereiche als Druckfehler markiert werden. Dieses Vorgehen ist der effizienteste Weg einer dynamischen Bildinspektion, weil hier der Reihe nach sämtliche im Druckbild gefundenen Abweichungen abgearbeitet werden und die Berechnung des Zeitaufwandes für den aktuell zu bearbeitenden Bereich immer erst direkt vor Start der Berechnung stattfindet, womit ein möglicher Abbruch der Bildinspektion bei Überschreiten des vorgegebenen Zeitrahmens für die Bildinspektion des aktuellen Druckbildes auch wirklich zielgenau nur dann stattfindet, wenn sich der Algorithmus kurz vor Ablauf dieses Zielzeitwertes befindet.

Eine weitere bevorzugte Weiterbildung des erfindungsgemäßen Verfahrens ist dabei, dass der Rechner den Zeitaufwand für die Untersuchung aller vor Beginn der Untersuchung berechnet und nur die Bereiche des aktuellen, digitalisierten Druckerzeugnisses untersucht, für welche genug Zeit hinsichtlich des vorgegebenen Zeitwertes vorhanden ist, wobei die Abweichungen nicht untersuchter Bereiche als Druckfehler markiert werden. Alternativ zur Berechnung der benötigten Zeitdauer für die Abarbeitung eines aktuellen Bereiches direkt vor dem Start der Bearbeitung dieses Bereiches kann natürlich auch die Berechnung der Zeitdauer direkt nach der Aufteilung in die Bereiche mit den jeweiligen Abweichungen durchgeführt werden und dann einfach mittels eines Abgleiches zwischen vorgegebenem Zeitrahmen bzw. Zeitwert und aufsummiertem Zeitaufwand für die einzelnen Bereiche bestimmt werden, wie viele Bereiche abgearbeitet werden können. Diese Vorgehensweise mag insgesamt etwas ungenauer sein, sie weist jedoch den Vorteil auf, dass damit eine Priorisierung der Reihenfolge, in welcher die jeweiligen Bereiche näher untersucht werden sollen, aufgrund des dann bereits berechneten Zeitaufwandes für die einzelnen Bereiche durchgeführt werden können.

Eine weitere bevorzugte Weiterbildung des erfindungsgemäßen Verfahrens ist dabei, dass der Abgleich des erfassten, digitalisierten Druckbildes mit einem digitalen Referenzbild durch Differenzbildung zwischen Druck- und Referenzbild und Auswertung des so entstehenden Differenzbildes geschieht. Die Bildung eines Differenzbildes zwischen erfasstem digitalisierten Druckbild und einem digital vorliegenden Referenzbild stellt eine der einfachsten Vorgehensweisen zur Ermittlung etwaiger Abweichungen und somit bestehender Druckfehler dar. Ob es sich beim Referenzbild dabei um ein von Anfang an digital vorliegendes Gutbild, welches eventuell aus den Druckvorstufendaten erzeugt wird, handelt, oder um ein eingelerntes gedrucktes Gutbild, spielt dabei für das vorliegende erfindungsgemäße Verfahren keine Rolle.

Eine weitere bevorzugte Weiterbildung des erfindungsgemäßen Verfahrens ist dabei, dass die räumliche Aufteilung jedes digitalisierten Druckerzeugnisses in Bereiche mit Abweichungen durchgeführt wird, indem bei der Auswertung des Differenzbildes Bereiche mit Abweichungen im Differenzbild isoliert werden. Im Differenzbild lassen sich dabei sehr einfach Bereiche mit Abweichungen erkennen, so dass damit die räumliche Aufteilung des digitalisierten Druckerzeugnisses sehr effizient durchgeführt werden kann.

Eine weitere bevorzugte Weiterbildung des erfindungsgemäßen Verfahrens ist dabei, dass Bereiche mit Abweichungen im Differenzbild mit einem niedrigen Füllgrad in einzelne, kleinere Bereiche unterteilt und ausgewertet werden und/oder der Rechner für diese Bereiche im erfassten, digitalisierten Druckbildes und/oder Referenzbild einen Lageausgleich durchführt. Der Füllgrad wird dabei definiert durch das Verhältnis von Pixeln mit Abweichungen im Differenzbild zur Gesamtzahl der Pixel im umgebenen Bereich der Abweichung. Ein niedriger Füllgrad bedeutet somit, dass bestehende Objekte im Druckbild bzw. Referenzbild sich nur geringfügig unterscheiden bzw. voneinander abweichen. Oft geschieht dies durch geringfügige Verschiebungen der Objekte im erfassten und digitalisierten Druckbild gegenüber denselben Objekten im Referenzbild, wobei diese Verschiebungen mittels eines Lagerausgleichs behoben werden können. Da die Abweichung im Differenzbild sich bei einer Verschiebung zudem sehr großräumig, aber eben nur mit einer geringen Fläche, eben einem niedrigen Füllgrad, zeigen, empfiehlt sich zudem in diesem Fall, diesen sehr großräumigen Bereich mit der Abweichung im Differenzbild in einzelne kleinere Bereiche zu unterteilen und diese kleineren Bereiche einzeln auszuwerten.

Eine weitere bevorzugte Weiterbildung des erfindungsgemäßen Verfahrens ist dabei, dass Bereiche mit Abweichungen im Differenzbild mit einem hohen Füllgrad nicht weiter ausgewertet werden und diese Abweichungen als Druckfehler markiert werden. Treten dagegen solche Bereiche mit einem hohen Füllgrad auf, bedeutet das, dass es zu sehr starken Abweichungen zwischen einzelnen Objekten im Druckbild und Referenzbild gekommen ist, welche nicht durch ein Lager als Ausgleich behoben werden können. Dies kann z.B. passieren, wenn das falsche Referenzbild oder ein falscher Teil des Referenzbildes mit dem jeweiligen Druckbild abgeglichen werden. In diesem Fall ist eine weitere Untersuchung dieser Abweichung hinsichtlich eines Druckfehlers unnötig, da klar ist, dass es sich entweder um einen massiven Druckfehler handelt oder, im Falle des falschen Referenzbildes oder des falschen Teils des Referenzbildes, ein massiver Fehler im Bildinspektionssystem bzw. - verfahren vorliegt.

Eine weitere bevorzugte Weiterbildung des erfindungsgemäßen Verfahrens ist dabei, dass die Untersuchung der produzierten Bilderzeugnisse vom Rechner in zwei Verfahrensschritten durchgeführt wird, wobei der erste Schritt eine gering schwankende Zeitdauer benötigt, während der zweite Schritt, welcher die Untersuchung der aufgeteilten Bereiche beinhaltet, bzgl. der benötigten Zeitdauer stark variabel ist, womit die Berechnung des Zeitaufwandes der Untersuchung nur für den zweiten Schritt durchgeführt wird. Im ersten relativ konstant langen Schritt wird dabei z.B. das Differenzbild gebildet und weitere Teile des Bildinspektionsverfahrens durchgeführt. Da die Zeitdauer für diesen ersten Teil entsprechend konstant ist, erübrigt sich hier eine Berechnung dieser Zeitdauer, da diese ohnehin bekannt ist. Die Abarbeitung der aufgeteilten Bereiche des Differenzbildes bzw. von Druck und Referenzbild, ist dagegen sehr stark variabel und kann dementsprechend erfindungsgemäß berechnet werden. Entscheidend für die Variabilität des zweiten Verfahrensschrittes ist dabei neben der Art der Abweichung in den einzelnen Bereichen, die entsprechend ausgewertet werden müssen, auch die zur Auswertung mittels des Rechners verfügbare Infrastruktur. So ist z.B. eine serielle Abarbeitung mittels einer CPO auch wesentlich leichter und genauer zu berechnen als eine parallele Abarbeitung mittels einer GPO. Die vorliegende Infrastruktur des Rechners und deren Verwendung hat somit ebenfalls einen entscheidenden Einfluss auf die Durchführung des erfindungsgemäßen Verfahrens.

Eine weitere bevorzugte Weiterbildung des erfindungsgemäßen Verfahrens ist dabei, dass das Verfahren für jeden mindestens einen Bildsensor separat durchgeführt wird, wobei entstehende Zeitreserven, welche bei der Bearbeitung eines digitalisierten Druckerzeugnisses eines Bildsensors entstehen, vom Rechner variabel für die Bearbeitung digitalisierter Druckerzeugnisse ev. weiterer Bildsensoren genutzt werden können. Da das zu verwendende Bildinspektionssystem oder Bilderfassungssystem zudem meist aus mehreren Bildsensoren bzw. Kameras besteht und das entsprechende erfindungsgemäße Verfahren somit für jeden dieser Bildsensoren separat durchgeführt werden muss, kann es passieren, dass je nach Art der zu untersuchenden Abweichung und der zur Verfügung stehenden Infrastruktur bei der Abarbeitung eines, von einem bestimmten Bildschirm erfassten Druckbildes, Zeitreserven entstehen, weil man nicht den gesamten zur Verfügung stehenden Zeitrahmen ausgeschöpft hat. Diese Zeitreserven können dann, falls notwendig, bei der Durchführung des erfindungsgemäßen Verfahrens für einen anderen Bildsensor und dessen erfasstes und digitalisiertes Druckbild verwendet werden. Die Zuteilung dieser Zeitreserven erfolgt dabei durch den verwendeten Rechner.

Eine weitere bevorzugte Weiterbildung des erfindungsgemäßen Verfahrens ist dabei, dass der mindestens eine Bildsensor Teil eines Inline-Inspektionssystems einer Bogendruckmaschine ist und dieses die produzierten Druckbogen als Druckerzeugnisse in der Bogendruckmaschine untersucht, wobei fehlerhaft markierten Druckbogen mittels einer Makulaturweiche ausgeschleust werden. Das erfindungsgemäße Verfahren wird bevorzugt für Inline-Inspektionssysteme, welche Teil einer Bogendruckmaschine sind und welche entsprechende bedruckte Bogen als Druckerzeugnisse auswerten, verwendet. Dies besitzt zudem den Vorteil, dass dann die fehlerhaften markierten Druckbogen auch mittels einer in solchen Bogendruckmaschinen meist vorhandenen Makulaturweiche sofort automatisiert ausgeschleust werden können. Alternativ ist natürlich auch eine einfache Markierung, z.B. mittels eines Streifens, im Ausleger, wobei dann diese entsprechend markierten Druckbogen entweder per Hand vom Drucker oder in einem nachgelagerten Verfahren automatisiert ausgeschleust werden müssen.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:

Figur 1:    ein Beispiel des Aufbaus eines Bilderfassungssystems zur Bildinspektion

Figur 2:    ein Beispiel eines Differenzbildes mit niedrigem Füllgrad

Figur 3:    ein Beispiel eines Differenzbildes mit hohem Füllgrad

Figur 4:    ein Beispiel eines Differenzbildes mit vielen Abweichungen

Figur 5:    den schematischen Ablauf des Verfahrens

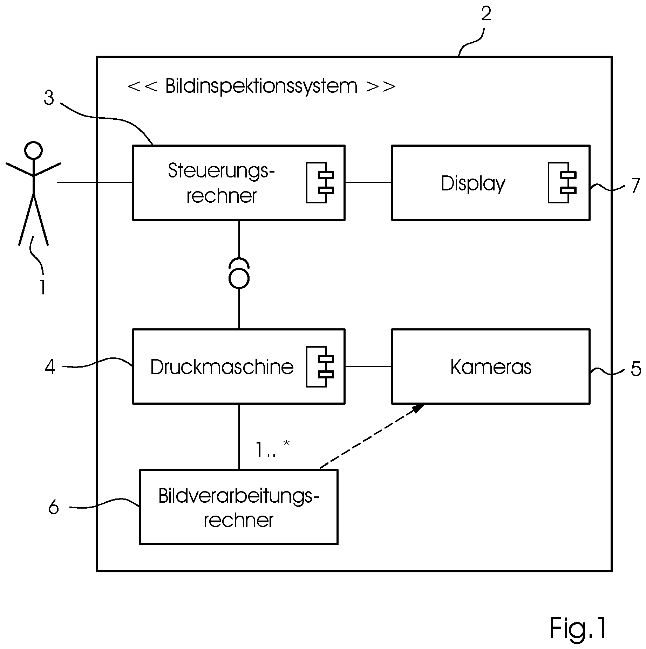

Figur 1 zeigt ein Beispiel für ein Bilderfassungssystem 2, welches das erfindungsgemäße Verfahren einsetzt. Es besteht aus mindestens einem Bildsensor 5, üblicherweise einer Kamera 5, welche in die Bogen-Druckmaschine 4 integriert ist. Die mindestens eine Kamera 5 nimmt die von der Druckmaschine 4 erzeugten Druckbilder auf und sendet die Daten an einen Rechner 3, 6 zur Auswertung. Dieser Rechner 3, 6 kann ein eigener separater Rechner 6 sein, z.B. ein oder mehrere spezialisierte Bildverarbeitungsrechner 6, oder auch mit dem Steuerungsrechner 3 der Druckmaschine 4 identisch sein. Mindestens der Steuerungsrechner 3 der Druckmaschine 4 besitzt ein Display 7, auf welchem die Ergebnisse der Bildinspektion dem Anwender 1 angezeigt werden.

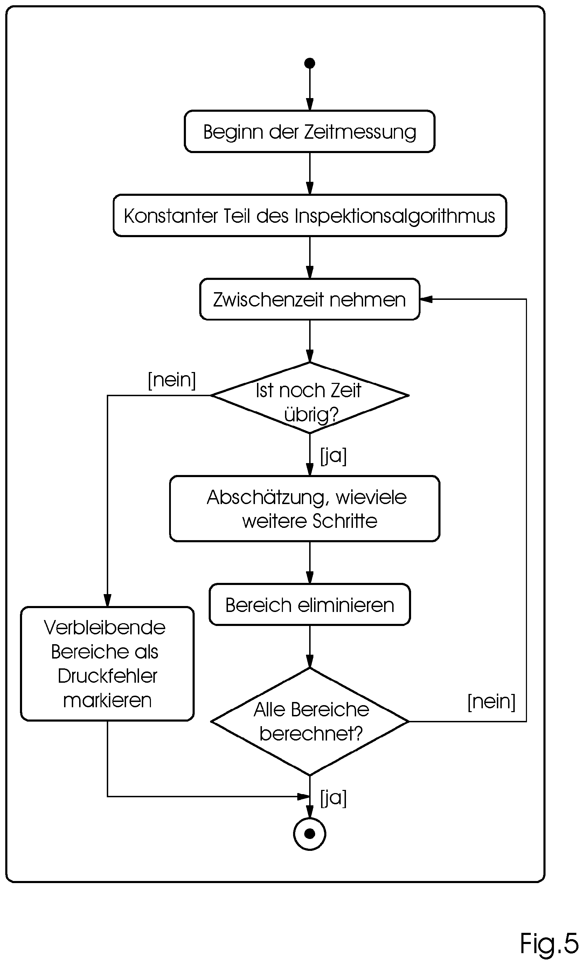

Das Verfahren wird in Figur 5 schematisch dargestellt. Wichtig für das grundlegende Verständnis ist zu beachten, dass bei einer Bogeninspektion nach einigen Vorverarbeitungsschritten praktisch immer Abweichungen 11, 11a, 11b mit Hilfe eines Differenzbildes 10, 10a, 11b zwischen Referenz- 8, 8a, 8b und Kamerabild 9, 9a, 9b identifiziert werden. Alle identifizierten Abweichungen 11, 11a, 11b werden danach meist einem lokalen Lageausgleich unterzogen um Pseudofehler, die auf Lagetoleranzen zurückzuführen sind, zu eliminieren. Da die Zeitdauer, die für die Eliminierung zur Verfügung steht, begrenzt ist, kann es jedoch zu zwei potentiellen Problemfällen kommen:

Fall 1: Es gibt einige sehr große Abweichungen 11, 11a; z.B. verursacht durch ein falsches Referenzbild 8. Diese wenigen großen Abweichungen 11, 11a können bei Bearbeitung mittels einer GPU auf einer Grafikkarte des Bildverarbeitungsrechners 6, allerdings nicht so verteilt werden, dass die GPU effizient ausgelastet ist.

Fall 2: Die Anzahl der Abweichungen 11b ist zu groß um in der vorgegebenen Zeit eliminiert zu werden; meist handelt es sich dann um viele sehr kleine Abweichungen 11b.

Auch eine Kombination aus beiden Fällen ist möglich. Im Folgenden werden diese zwei Fälle erstmal separat betrachtet.

Bei großen Abweichungen 11, 11a wie in Fall 1 unterscheidet man zwei Szenarien:

Fall I.a: Ein komplett falsches Sujet wurde verwendet. D.h. es werden viele große Abweichungen 11 erzeugt, die einen hohen Füllgrad aufweisen. Füllgrad ist dabei das Verhältnis von Pixeln mit Abweichungen 11 zur Gesamtzahl der Pixel um umgebenden Rechteck der Abweichung 11.

Fall 1.b: Es gibt eines oder wenige große scharfkantige Objekt(e), welches nicht korrekt ausgerichtet wurde. D.h. es wird eine große Abweichung 11a erzeugt, der einen sehr geringen Füllgrad aufweist; nämlich nur eine dünne Abweichung an der Objektkante.

Dem Verfahren liegt nun die Idee zugrunde für Fall 1.a keinen lokalen Lageausgleich durchzuführen, da in diesem Fall ein lokaler Lageausgleich sowieso keinen positiven Effekt haben wird. Bei Fall 1.b könnte ein lokaler Lageausgleich eine positive Wirkung haben. Es werden nun beide Fälle über den Füllgrad der Abweichungen 11, 11a unterschieden. Dies wird im Folgenden entsprechend anhand von Beispielen für jeden Fall dargestellt.

Beispiel Fall Ia:

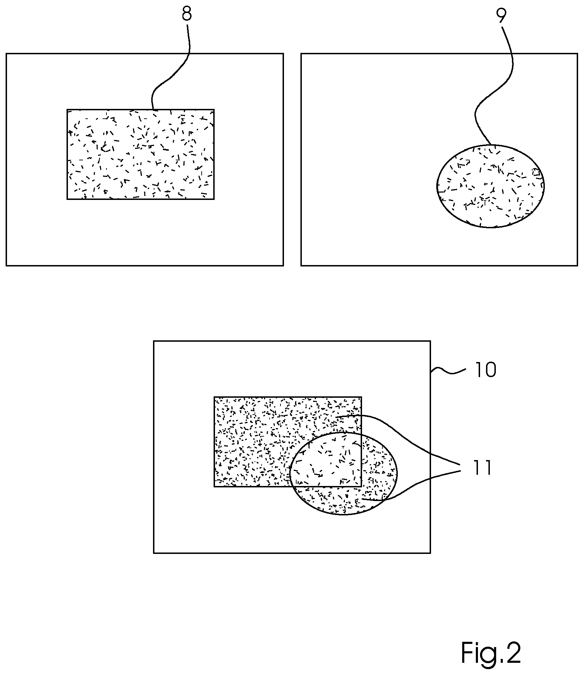

Wie in Figur 2 zu sehen ist entstehen hier im Differenzbild 10 zwei große zusammenhängende Abweichungen 11, welche in Figur 2 auch markiert sind, die jede für sich einen hohen Füllgrad aufweisen. Das Differenzbild 10 entsteht durch Subtraktion von Soll-/Referenzbild 8, welches in Figur 2 links oben dargestellt ist und des vom Bilderfassungssystem 2 erzeugten, realen Druckbildes 9, welches rechts oben in Figur 2 zu sehen ist. Da durch das falsche Sujet hier ein lokaler Lageausgleich ohnehin nicht zielführend wäre, kann so die dafür benötigte, sehr lange, Rechenzeit komplett eingespart werden. Es handelt sich hier immer um einen Bildfehler - in diesem Fall entweder um das falsche erfasste Druckbild 9 oder das falsche Referenzbild 8.

Beispiel Fall 1b:

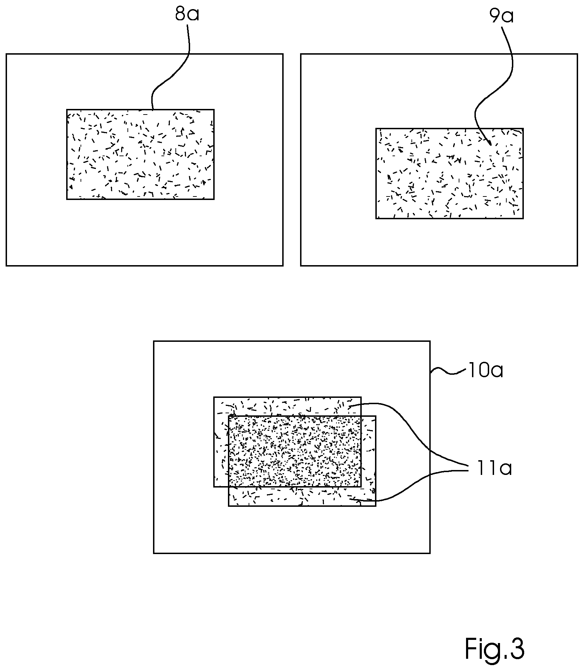

Wie in Figur 3 zu sehen ist entstehen hier im Differenzbild 10a zwei zusammenhängende, große Abweichungen 11a, welche auch hier markiert sind, die jede für sich einen geringen Füllgrad aufweisen. Ein lokaler Lageausgleich würde in diesem Fall zu einer gewünschten Eliminierung der Abweichungen 11a führen. Um Fall I.b für die zur Auswertung verwendete GPU zu optimieren und damit die Rechenzeit zu reduzieren, werden die beiden großen Abweichungen 11a in mehrere, kleine Abweichungen aufgeteilt, da es auf einer GPU effizienter ist, mehrere kleine Abweichungen parallel zu bearbeiten. Dadurch wird dieser Fall I.b in den Fall 2 überführt. Alternativ ist es zudem möglich, diese zerstückelten Abweichungen auf einer CPU des Bilderfassungsrechners zu berechnen, weil der CPU-Algorithmus genau für diese Art von Abweichungen, nämlich die beste Übereinstimmung in der Position 0, optimiert ist.

Es ist damit also klar, dass sich alle bei der Bildinspektion auftretenden Möglichkeiten, die unter Fall 1 subsummieren, auf den Fall 2 zurückführen lassen (Fall 1b) oder gar nicht erst weiterverarbeitet werden müssen (Fall 1.a).

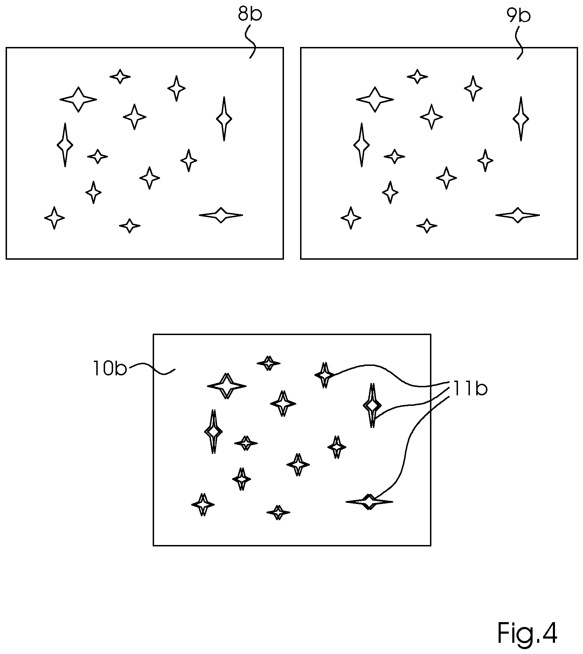

Ein Beispiel für den hauptsächlich zu bearbeitenden Fall 2, z.B. dass von Anfang an, viele sehr kleine Abweichungen 11b auftreten, wird wiederum in Figur 4 dargestellt.

Das Verfahren wird nun für jede beteiligte Kamera, bzw. jeden beteiligten Bildsensor 5 des Bilderfassungssystems 2 durchgeführt. Hierfür wird ausgenutzt, dass der erste Teil des Bildinspektionsalgorithmus'eine relativ konstante Zeit beansprucht. Dieser Teil liegt am Anfang des Bildinspektionsalgorithmus. Es gibt jedoch einen zweiten Teil, bei dem die Rechendauer extrem schwankt. Die Idee ist nun, diesen variablen Teil in Zeitblöcke aufzuteilen und die Rechendauer dieser Zeitblöcke im Vorhinein abzuschätzen.

Faktoren, die Einfluss auf die Rechenzeit der Abweichungseliminierung haben sind:

- die Fläche es umgebenden Rechtecks einer Abweichung 11, 11a, 11b: $A_A$
- die Anzahl der Abweichungen 11, 11a, 11b: n
- die Rechengeschwindigkeit der Recheneinheit 6: m

Faktoren, die Einfluss auf die verfügbare Rechendauer haben sind:

- die Druckgeschwindigkeit

Aus Untersuchungen mit einer GPU sind zudem zwei Erkenntnisse bekannt:

1. Die Rechenzeit steigt ungefähr linear mit der Abweichungsgröße

$$t_s \cong \frac{1}{m} \times A_A$$

2. Die Rechenzeit steigt ungefähr linear mit der Abweichungsanzahl $t_g \cong t_s \times n$ Für ein seriell arbeitendes System wie eine Einzel-CPU würde sich die Gesamtzeit $t_g$ aus der Summe der Rechenzeiten der n Abweichungen 11, 11a, 11b ergeben:

$$t_g \sum_{i=0}^{n} \frac{1}{m} \times BlobSize$$

Für ein parallel arbeitendes System wie eine GPU ist die Rechenzeit allerdings schwieriger zu prognostizieren, wenn man die Verteilung der Abweichungen 11, 11a, 11b auf die einzelnen Rechenkerne der GPU nicht aktiv steuert. Deshalb kann für eine GPU, bei zufälliger Verteilung der Abweichungen 11, 11a, 11b auf die GPU Rechenkerne, nur eine sehr grobe Abschätzung der Rechenzeit erfolgen. Bedingt durch die genannte Tatsache ist es somit sinnvoll, eine Annäherung an die tatsächliche Rechenzeit in mehreren Schritten durchzuführen.

Der Ablauf wird wie erwähnt in Figur 5 schematisch dargestellt. Der Teil des Inspektionsalgorithmus' der eine relativ konstante Zeit beansprucht liegt am Anfang des Algorithmus'. Der zweite Teil, bei welchem die Rechendauer extrem schwankt, folgt darauf und wird vom Rechner 6 in Zeitblöcke aufgeteilt, wobei die Rechendauer dieser Zeitblöcke vom Rechner 6 abgeschätzt wird. Es wird dann geschaut, ob noch genug Zeit für die Verarbeitung des nächsten Blocks übrig ist. Sollte dies nicht der Fall sein, so wird der Algorithmus abgebrochen und die verbleibenden Abweichungen werden als echte Druckfehler eingestuft. Dabei existieren zwei Alternativen. Es können entweder alle Abweichungen 11, 11a, 11b abgeschätzt und danach entschieden werden, ob die Zeit zur Bearbeitung aller Abweichungen 11, 11a, 11b ausreicht. Falls nicht kann entschieden werden, welche Abweichungen 11, 11a, 11b bearbeitet werden sollen. Oder es wird jeweils die nächste Abweichung 11, 11a, 11b hinsichtlich ihres Zeitbedarfs abgeschätzt und falls für diese noch genügend Zeit vorhanden ist, sie analysiert und dann der Algorithmus mit der nächsten Abweichung 11, 11a, 11b fortgesetzt. Figur 5 zeigt die letztere Variante.

Im Folgenden ein kurzes Beispiel zur Erläuterung. Die Bogeninspektion hat pro Kamera 5 bei voller Druckgeschwindigkeit eine Rechendauer von 250ms zur Verfügung. Der konstante Anteil der Berechnungen beträgt 100ms. Bei einer Rechengeschwindigkeit der GPU von m = 16,5 MPx/s können in den verbleibenden 150ms ca. 5000 Abweichungen mit einer Größe von je 100*220 $px^2$ berechnet werden.

Es sind zudem weitere Optimierungen möglich. So könnte man die Konstante m in jeder Startphase des Bilderfassungssystems 2 mit einem kurzen Test bestimmen. So bräuchte man sie nicht als globale Konstante zu definieren. Als weitere Idee könnte die Summe der Rechenzeiten der Kameras 5 pro Bogen verwendet werden, um einzelnen Teilbildern mehr Rechenzeit zuzuteilen.

Bsp.: Die erste Berechnung mit Kamera ,0' dauert auf Grund des kleineren Papierformats (Randbeschnitt) in Summe nur 190ms anstatt von 250ms. Dann könnten die verbleibenden 60ms der nächsten Kamerabildinspektion hinzugerechnet werden womit für diese Kamera 5 dann 310ms zur Verfügung ständen. Wird diese Inspektion dann in 280ms beendet so werden die verbleibenden 30ms wieder an die nächste Kamerabildinspektion weitergereicht, solange bis alle vier Kamerabilder verarbeitet wurden.

**Bezugszeichenliste**

| | |
|---|---|
| 1 | Anwender |
| 2 | Bilderfassungssystem |
| 3 | Steuerungsrechner |
| 4 | Druckmaschine |
| 5 | Bildsensor / Kamera |
| 6 | Bildverarbeitungsrechner |
| 7 | Display |
| 8, 8a, 8b | digitales Soll-/Referenzbild |
| 9, 9a, 9b | digital erfasstes Druck-/Kamerabild |
| 10, 10a, 10b | Differenzbild |
| 11, 11a, 11b | Abweichung |

**Patentansprüche**

1. Verfahren zur Inspektion von Druckerzeugnissen einer Bedruckstoffe verarbeitenden Maschine (4) mittels eines Rechners (6), wobei produzierte Druckerzeugnisse mittels mindestens eines Bildsensors (5) erfasst, digitalisiert und vom Rechner (6) hinsichtlich möglicher Fehler untersucht werden, wobei Fehler in den Druckerzeugnissen vom Rechner (6) durch Abgleich des erfassten, digitalisierten Druckbildes (9, 9a, 9b) mit einem digitalen Referenzbild (8, 8a, 8b) und Auswertung auftretender Abweichungen (11, 11a, 11b) ermittelt werden und fehlerhafte Druckerzeugnisse entsprechend markiert und ausgeschleust werden,

   **dadurch gekennzeichnet,**
   **dass** der Rechner (6) eine räumliche Aufteilung jedes digitalisierten Druckbildes (9, 9a, 9b) in Bereiche mit Abweichungen (11, 11a, 11b) vornimmt, den Zeitaufwand der Untersuchung jedes dieser Bereiche berechnet und die Untersuchung eines digitalisierten Druckbildes (9, 9a, 9b) abbricht, wenn der Zeitaufwand zur Untersuchung der Bereiche einen vorgegebenen Zeitwert pro digitalisiertem Druckbild (9, 9a, 9b) überschreitet.

2.    Verfahren nach Anspruch 1,

   **dadurch gekennzeichnet,**
   **dass** der Rechner (6) den Zeitaufwand der Untersuchung jedes der Bereiche jeweils für jeden Bereich direkt vor der Untersuchung dieses Bereichs berechnet und die Untersuchung des aktuellen, digitalisierten Druckbildes (9, 9a, 9b) abbricht, wenn der vorgegebene Zeitwert überschritten wird, wobei die Abweichungen (11, 11a, 11b) noch nicht untersuchter Bereiche als Druckfehler markiert werden.

3.    Verfahren nach Anspruch 1,

   **dadurch gekennzeichnet,**
   **dass** der Rechner (6) den Zeitaufwand für die Untersuchung aller Bereiche vor Beginn der Untersuchung berechnet und nur die Bereiche des aktuellen, digitalisierten Druckbildes (9, 9a, 9b) untersucht, für welche genug Zeit hinsichtlich des vorgegebenen Zeitwertes vorhanden ist, wobei die Abweichungen (11, 11a, 11b) nicht untersuchter Bereiche als Druckfehler markiert werden.

4.    Verfahren nach einem der vorherigen Ansprüche,

   **dadurch gekennzeichnet,**
   **dass** der Abgleich des erfassten, digitalisierten Druckbildes (9, 9a, 9b) mit einem digitalen Referenzbild (8, 8a, 8b) durch Differenzbildung zwischen Druck- (9, 9a, 9b) und Referenzbild (8, 8a, 8b) und Auswertung des so entstehenden Differenzbildes (10, 10a, 10b) geschieht.

5.    Verfahren nach Anspruch 4,

   **dadurch gekennzeichnet,**
   **dass** die räumliche Aufteilung jedes digitalisierten Druckbildes (9, 9a, 9b) in Bereiche mit Abweichungen (11, 11a, 11b) durchgeführt wird, indem bei der Auswertung des Differenzbildes (10, 10a, 10b) Bereiche mit Abweichungen (11, 11a, 11b) im Differenzbild (10, 10a, 10b) isoliert werden.

6.    Verfahren nach Anspruch 5,

   **dadurch gekennzeichnet,**

dass Bereiche mit Abweichungen (11, 11a, 11b) im Differenzbild (10, 10a, 10b) mit einem niedrigen Füllgrad in einzelne, kleinere Bereiche unterteilt und ausgewertet werden und/oder der Rechner (6) für diese Bereiche im erfassten, digitalisierten Druckbild (9, 9a, 9b) und/oder Referenzbild (8, 8a, 8b) einen Lageausgleich durchführt, wobei der Füllgrad dabei durch das Verhältnis von Pixeln mit Abweichungen im Differenzbild zur Gesamtzahl der Pixel im umgebenen Bereich der Abweichung definiert wird.

7.    Verfahren nach Anspruch 5 oder 6,

   **dadurch gekennzeichnet,**
   **dass** Bereiche mit Abweichungen (11, 11a, 11b) im Differenzbild (10, 10a, 10b) mit einem hohen Füllgrad nicht weiter ausgewertet werden und diese Abweichungen (11, 11a, 11b) als Druckfehler markiert werden, wobei der Füllgrad dabei durch das Verhältnis von Pixeln mit Abweichungen im Differenzbild zur Gesamtzahl der Pixel im umgebenen Bereich der Abweichung definiert wird.

8.    Verfahren nach einem der vorherigen Ansprüche,

   **dadurch gekennzeichnet,**
   **dass** die Untersuchung der produzierten Druckerzeugnisse vom Rechner (6) in zwei Verfahrensschritten durchgeführt wird, wobei die Berechnung des Zeitaufwandes der Untersuchung nur für den zweiten Schritt durchgeführt wird.

9.    Verfahren nach einem der vorherigen Ansprüche,

   **dadurch gekennzeichnet,**
   **dass** das Verfahren für jeden mindestens einen Bildsensor (5) separat durchgeführt wird, wobei entstehende Zeitreserven, welche bei der Bearbeitung eines digitalisierten Druckbildes (9, 9a, 9b) eines Bildsensors (5) entstehen, vom Rechner (6) variabel für die Bearbeitung digitalisierter Druckbilder (9, 9a, 9b) eventueller weiterer Bildsensoren (5) genutzt werden können.

10.  Verfahren nach einem der vorherigen Ansprüche,

   **dadurch gekennzeichnet,**
   **dass** der mindestens eine Bildsensor (5) Teil eines Inline-Bilderfassungssystems (2) einer Bogendruckmaschine (4) ist und dieses die produzierten Druckbogen als Druckerzeugnisse in der Bogendruckmaschine (4) untersucht, wobei fehlerhaft markierte Druckbogen mittels einer Makulaturweiche ausgeschleust werden.

## Claims

1. Method of inspecting printed products of a machine (4) for processing printing substrates using a computer (6), wherein produced printed products are recorded and digitized by means of at least one image sensor (5) and analyzed by the computer (6) to find potential defects, wherein defects in the printed products are detected by the computer (6) by comparing the recorded and digitized printed image (9, 9a, 9b) with a digital reference image (8, 8a, 8b), analyzing occurring deviations (11, 11a, 11b), and marking defective printed products in a suitable way for them to be removed,

   **characterized**
   **in that** the computer (6) spatially subdivides every digitized printed image (9, 9a, 9b) into regions with deviations (11, 11a, 11b), calculates the time required to analyze every one of said regions, and terminates the analysis of a digitized printed image (9, 9a, 9b) when the time required to analyze the regions exceeds a predefined value of time per digitized printed image (9, 9a, 9b).

2. Method according to claim 1,

   **characterized**
   **in that** the computer (6) calculates the time required to analyze every one of the regions immediately before analyzing the region in question, terminates the analysis of the current digitized printed image (9, 9a, 9b) when the predefined value of time is exceeded, and marks deviations (11, 11a, 11b) in not-yet-analyzed regions as print defects.

3. Method according to claim 1,

   **characterized**
   **in that** the computer (6) calculates the time required for the analysis of all regions before the analysis is started, only analyzes those regions in the current digitized printed image (9, 9a, 9b) for which there is sufficient time in terms of the predefined value of time, and marks the deviations (11, 11a, 11b) of non-analyzed regions as print defects.

4. Method according to any one of the preceding claims,

   **characterized**
   the comparison between the recorded digitized printed image (9, 9a, 9b) and a digital reference image (8, 8a, 8b) is done by creating a differential image between the printed image (9, 9a, 9b) and the reference image (8, 8a, 8b) and analyzing the differential image (10, 10a, 10b) that has been created in this way.

5. Method according to claim 4,

   **characterized**
   **in that** the spatial subdivision of every digitized printed image (9, 9a, 9b) into regions with deviations (11, 11a, 11b) is done by isolating regions with deviations (11, 11a, 11b) in the differential image (10, 10a, 10b) when the differential image (10, 10a, 10b) is analyzed.

6. Method according to claim 5,

   **characterized**
   **in that** regions with deviations (11, 11a, 11b) with a low filling grade in the differential image (10, 10a, 10b) are subdivided into individual smaller regions and analyzed and/or in that the computer (6) carries out position correction for these regions in the recorded digitized printed image (9, 9a, 9b) and/or in the reference image (8, 8a, 8b), the filling grade being defined by the ratio between pixels with deviations in the differential image and the total number of pixels in the surrounding region of the deviation.

7. Method according to claim 5 or 6,

   **characterized**
   **in that** regions with deviations (11, 11a, 11b) with a high filling grade in the differential image (10, 10a, 10b) are not further analyzed and are marked as print defects, the filling grade being defined by the ratio between pixels with deviations in the differential image and the total number of pixels in the surrounding region of the deviation.

8. Method according to any one of the preceding claims,

   **characterized**
   **in that** the analysis of the produced printed products by means of the computer (6) is done in two steps and the time required for analysis is calculated for the second step only.

9. Method according to any one of the preceding claims,

   **characterized**
   **in that** the method is implemented separately for every one of the at least one image sensors (5), and the computer (6) may flexibly use time saved in the processing of a digitized printed image (9, 9a, 9b) of an image sensor (5) for the processing of digitized printed image (9, 9a, 9b) of potential further image sensors (5).

10. Method according to any one of the preceding claims,

> **characterized**
> **in that** the at least one image sensor (5) is part of an inline image recording system (2) of a sheet-fed printing machine (4) and said system (2) analyzes the produced printed sheets as printed products in the sheet-fed printing machine (4) and removes printed sheets that have been marked as defective via a waste deflector.

**Revendications**

1. Procédé d'inspection de produits imprimés d'une machine (4) traitant des supports d'impression au moyen d'un ordinateur (6), pour lequel les produits imprimés produits sont enregistrés au moyen d'un capteur d'image (5) au moins, numérisés et examinés par l'ordinateur (6) en vue de la détection d'éventuels défauts, les défauts des produits imprimés étant déterminés par l'ordinateur (6) en comparant l'image imprimée numérisée saisie (9, 9a, 9b) avec une image de référence numérique (8, 8a, 8b) et en évaluant les écarts (11, 11a, 11b) qui apparaissent, et les produits imprimés présentant des défauts étant repérés en conséquence et rejetés,

> **caractérisé en ce**
> **que** l'ordinateur (6) effectue une division spatiale de chaque image d'impression numérisée (9, 9a, 9b) en zones présentant des écarts (11, 11a, 11b), calcule le temps nécessaire à l'examen de chacune de ces zones et interrompt l'examen d'une image imprimée numérisée (9, 9a, 9b) si le temps nécessaire à l'examen des zones dépasse une valeur de temps prédéterminée par image imprimée numérisée (9, 9a, 9b).

2. Procédé selon la revendication 1,

> **caractérisé en ce**
> **que** l'ordinateur (6) calcule le temps nécessaire à l'examen de chacune des zones pour chaque zone directement avant l'examen de cette zone et interrompt l'examen de l'image d'impression numérisée actuelle (9, 9a, 9b) si la valeur de temps prédéterminée est dépassée, les écarts (11, 11a, 11b) des zones non encore examinées étant repérés comme erreurs d'impression.

3. Procédé selon la revendication 1,

> **caractérisé en ce**
> **que** l'ordinateur (6) calcule le temps nécessaire pour l'examen de toutes les zones avant le début de l'examen et n'examine que les zones de l'image d'impression numérisée actuelle (9, 9a, 9b) pour lesquelles il y a suffisamment de temps en ce qui concerne la valeur de temps prédéterminée, les écarts (11, 11a, 11b) des zones qui n'ont pas été examinées étant repérés comme erreurs d'impression.

4. Procédé selon l'une des revendications précédentes,

> **caractérisé en ce**
> **que** la comparaison de l'image d'impression (9, 9a, 9b) saisie et numérisée avec une image de référence (8, 8a, 8b) numérique s'effectue par la formation d'une différence entre l'image d'impression (9, 9a, 9b) et l'image de référence (8, 8a, 8b) et l'évaluation de l'image de différence (10, 10a, 10b) ainsi générée.

5. Procédé selon la revendication 4,

> **caractérisé en ce**
> **que** la division spatiale de chaque image d'impression numérisée (9, 9a, 9b) en zones avec des écarts (11, 11a, 11b) est effectuée en isolant des zones avec des écarts (11, 11a, 11b) dans l'image différentielle (10, 10a, 10b) pendant l'évaluation de l'image différentielle (10, 10a, 10b).

6. Procédé selon la revendication 5,

> **caractérisé en ce**
> **que** des zones présentant des écarts (11, 11a, 11b) dans l'image différentielle (10, 10a, 10b) avec un faible degré de remplissage sont subdivisées en zones individuelles plus petites et évaluées et/ou que l'ordinateur (6) effectue un ajustement de position pour ces zones dans l'image d'impression (9, 9a, 9b) et/ou l'image de référence (8, 8a, 8b) saisie et numérisée, le degré de remplissage étant défini dans ce cas par le rapport entre les pixels présentant des écarts dans l'image différentielle et le nombre total de pixels dans la zone environnante de l'écart.

7. Procédé selon la revendication 5 ou 6,

> **caractérisé en ce**
> **que** les zones présentant des écarts (11, 11a, 11b) dans l'image différentielle (10, 10a, 10b) avec un degré de remplissage élevé ne sont pas évaluées plus avant et que ces écarts (11, 11a, 11b) sont repérés comme des défauts d'impression, le degré de remplissage étant défini dans ce cas par le rapport entre les pixels présentant des écarts dans l'image différentielle et le nombre total de pixels dans la zone environnante de l'écart.

8. Procédé selon l'une des revendications précédentes,

   **caractérisé en ce**
   **que** l'examen des produits imprimés produits est effectué par l'ordinateur (6) en deux étapes du processus, le calcul du temps nécessaire à l'examen n'étant effectué que pour la deuxième étape.

9. Procédé selon l'une des revendications précédentes,

   **caractérisé en ce**
   **que** le procédé est exécuté séparément pour chaque capteur d'images (5) au moins, les réserves de temps qui apparaissent lors du traitement d'une image d'impression numérisée (9, 9a, 9b) d'un capteur d'images (5) pouvant être utilisées de manière variable par l'ordinateur (6) pour le traitement d'images d'impression numérisées (9, 9a, 9b) d'autres capteurs d'images (5) éventuels.

10. Procédé selon l'une des revendications précédentes,

    **caractérisé en ce**
    **que** le capteur d'image (5) au moins fait partie d'un système de détection d'image en ligne (2) d'une machine d'impression à feuilles (4) et que ce dernier examine les feuilles imprimées produites comme produits imprimés dans la machine d'impression à feuilles (4), les feuilles imprimées repérées comme défectueuses étant éjectées au moyen d'un séparateur de rebut.

Fig.1

Fig.2

8a

9a

10a

11a

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3456535 A1